Europäisches Patentamt

(19) European Patent Office

Office européen des brevets

(11) Publication number: **0 195 463**
**A2**

(12) **EUROPEAN PATENT APPLICATION**

(21) Application number: **86200114.6**

(22) Date of filing: **29.01.86**

(51) Int. Cl.⁴: **B 60 K 28/00**
**F 16 D 25/14**

(30) Priority: **11.03.85 US 710593**

(43) Date of publication of application:
**24.09.86 Bulletin 86/39**

(84) Designated Contracting States:
**DE FR GB IT NL SE**

(71) Applicant: **APPLIED POWER INC.**
**P.O.Box 325**
**Milwaukee Wisconsin 53201(US)**

(72) Inventor: **Symes, Randall A.**
**11040, West Wildwood Lane**
**Apt. F-304, West Allis Wisconsin 53227(US)**

(72) Inventor: **Stuart, Thomas G.**
**R4 W 325 S9841**
**Beulah Wisconsin 53149(US)**

(74) Representative: **Kupecz, Arpad et al,**
**Octrooibureau Los en Stigter B.V. Postbox 20052**
**NL-1000 HB Amsterdam(NL)**

(54) Hydraulic master-slave cylinder clutch with safety system to assure positive clutch actuation.

(57) A hydraulic master-slave system for clutch actuation includes a safety system to prevent a vehicle from being started unless the clutch is positively actuated. The preferred safety system comprises a pair of Hall effect sensors located respectively in the master cylinder and the slave cylinder to detect whether the cylinders are operating properly. Both sensors would have to be actuated to start the vehicle. Other detecting systems useful in the present invention include fluid pressure sensors, optical bar code readers or micro-switches.

./...

Croydon Printing Company Ltd.

Fig.1

### HYDRAULIC MASTER-SLAVE CYLINDER CLUTCH WITH SAFETY SYSTEM TO ASSURE POSITIVE CLUTCH ACTUATION

Field of the Invention - The present invention relates generally to the art of vehicle clutch systems, and more particularly to clutch systems employing both a master cylinder and a slave cylinder. Still more specifically, the present invention relates to a hydraulic master-slave clutch system which also includes a safety system to insure positive clutch actuation before a vehicle can be started.

Description of the Prior Art - It is well known in the motor vehicle art that a hydraulic cylinder can be employed for clutch or brake actuation. It is also known to employ a master hydraulic cylinder coupled respectively to the clutch pedal and to a slave hydraulic cylinder. The slave cylinder in turn is coupled to the clutch.

One representative type of hydraulic master cylinder is disclosed in Hodkinson's United States Patent No. 4,267,697 issued May 10, 1981 for "Hydraulic Master Cylinder." Illustrative master-slave cylinder combinations for clutch actuation are shown in the following United States Patents:

Maurice, No. 3,307,667, issued March 7, 1967 for "Declutching Device for Obviating Wear Adjustment"; Buchanan, et al, No. 3,406,800 issued October 22, 1968, for "Hydraulic Clutch Wear Warning Device"; and Espenschied, No. 3,752,282 issued August 14, 1923, for "Clutch with Plural Fluid Releasing Means." In each of the latter three patents a master cylinder is located in the vicinity of the clutch pedal and is actuated by a push rod connected thereto. Hydraulic tubing connects the master cylinder to a slave cylinder located in the vicinity of the clutch. The slave cylinder is connected to the clutch, e.g. by a push rod. The combination of a master and a slave system for clutch actuation has proven to be advantageous because it permits greater flexibility in vehicle design, and combination systems are now employed in a number of commercial vehicles. Obviously, the use of two cylinders increases the number of components which can malfunction.

In the operation of vehicles which include a manual transmission, it is extremely important to insure that the clutch is properly actuated before the vehicle engine is started. If the clutch is not properly engaged, the vehicle may lurch when the ignition switch is turned on, leading to damage to the car or other property or to personal injury. Safety systems are known which employ limit switches activated by depressing the clutch petal itself, but prior art clutch systems do not include any safety systems coupled to the cylinders and which will prevent ignition if the clutch is not properly engaged. Morever, even though some of the aforementioned patents include detecting systems for indicating clutch wear, such systems do not address the ignition problems discussed above.

## OBJECTS AND SUMMARY OF THE INVENTION

It is a principal object of the present invention to provide a vehicle hydraulic master-slave clutch system which additionally includes a safety system for deactivating the vehicle ignition system if positive clutch actuation has not been achieved.

Another object of the present invention is to provide a hydraulic clutch actuation system which is safer and more reliable than prior art clutch actuation systems.

Yet another object of the present invention is to provide a clutch master-slave system and a plurality of different safety systems which may be used therewith to accomplish the principal object of this invention.

A different object of the present invention is to provide a master-slave clutch system which may be readily adapted to a wide variety of vehicle types and styles.

How these and other objects of the invention are accomplished will be described in the following detailed description of the

0195463

preferred and alternate embodiments, taken in conjunction with the drawings. Generally, however, they are accomplished by providing a hydraulic master cylinder coupled to the vehicle clutch pedal, which responds to depressing of the clutch to deliver hydraulic fluid under pressure to a slave cylinder. The slave cylinder in turn is coupled to the vehicle's clutch, e.g. by a push rod. In the present invention a safety system is additionally provided to insure that the vehicle cannot be started if positive actuation of the clutch has not been achieved. Several different types of safety systems are disclosed. In one preferred embodiment, Hall effect sensors are located in both the master and slave cylinders and the sensors are interconnected with the vehicle's ignition system. In the event either of the sensors is not activated by depressing the clutch pedal, vehicle ignition will be prevented. In alternate embodiments a single Hall effect sensor can be used with the slave cylinder; fluid pressure sensors can be employed at one or more locations in the system; optical bar code readers can be employed with one or both cylinders; or microswitches can be added at appropriate locations in the cylinders to sense movement of the piston or rods of the cylinders. Furthermore, the electrical components of the safety system can be coupled to an indicator light, buzzer or like device to advise the vehicle operator if a malfunction has occurred.

-4-

While the following description of the preferred and alternate embodiments depict a number of ways of accomplishing the objects of the invention, the objects could also be accomplished using other types of sensors which would become apparent to those skilled in the art after the present specification has been read and understood. Accordingly, the disclosed embodiments are to be taken as illustrative rather than limiting.

## DESCRIPTION OF THE DRAWINGS

FIGURE 1 is a perspective view (partially in section and with parts broken away) of a hydraulic clutch master-slave cylinder system according to the preferred embodiment of the present invention, illustrating the use of Hall effect sensors as the safety detecting device;

FIGURE 2 is a schematic view of a vehicle electrical system embodying the sensors shown in FIGURE 1;

FIGURE 3 is a perspective view (with parts broken away) showing a first alternate embodiment of the present invention in which optical bar code sensors are used as the safety detecting device;

FIGURE 4 is a perspective view (with parts broken away) of a second alternate embodiment of the present invention showing the use of a mechanical switch as the safety detecting device; and

FIGURE 5 is a partial perspective view of a third alternate embodiment of the present invention and illustrating the use of a fluid pressure sensor as the safety detecting device.

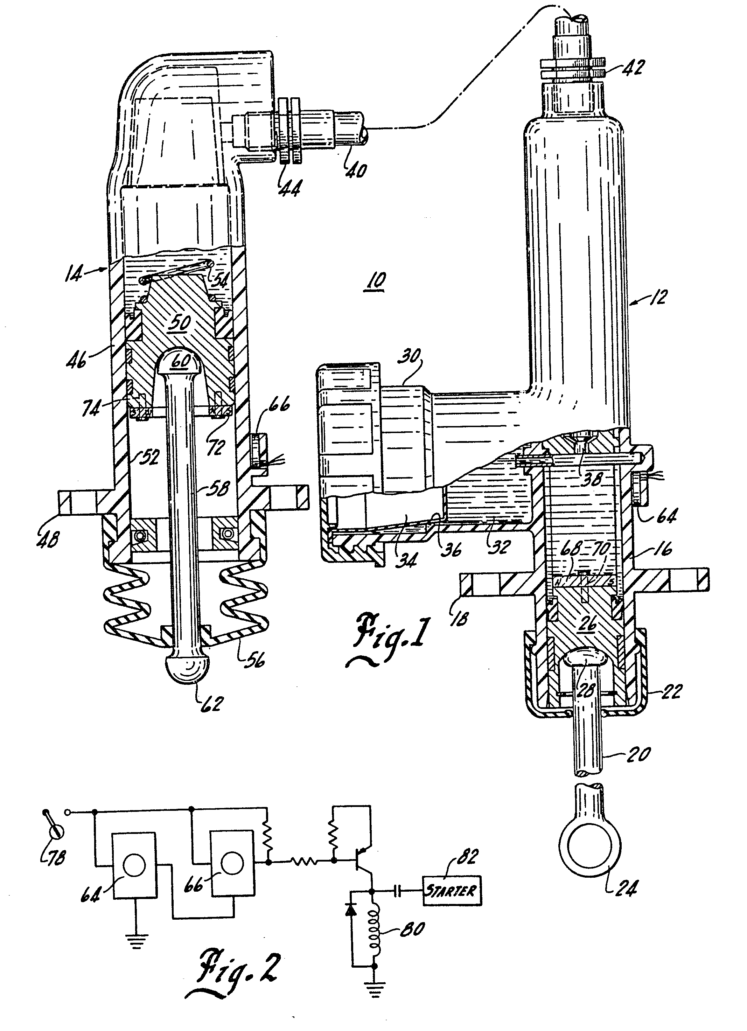

In FIGURES 1-5, like reference numerals are used to indicate like components.

## DESCRIPTION OF THE PREFERRED AND ALTERNATE EMBODIMENTS

Before proceeding to the description of the FIGURES, it should be understood at the outset that the present invention is readily adaptable to a wide variety of vehicles, such as automobiles, trucks, off-road vehicles, etc. In short, it can be employed with any vehicle which includes a clutch pedal to be depressed by the operator and a clutch assembly located remotely therefrom. Moreover, it should also be understood that the present invention can utilize a number of different kinds of master or slave cylinders. It is for this reason that the basic cylinder components are not shown in detail. Also, the relative sizes of the cylinders can vary widely, and in certain of the drawings for this case, the master cylinder component has been reduced in size for illustration reasons only. Finally, it should be understood that the present invention may be employed with other clutch control systems already known.

In reference to other clutch control systems, it is known that a manual transmission automobile can include a switch system for indicating when the shift lever is in the neutral position. This will allow the driver to start the car, whether or not the clutch pedal is depressed when the shift lever is in the neutral position. In recent years, this type of control has been combined with the clutch pedal activated mechanical switch system discussed earlier in of this specification. Such a "neutral" override can be employed with the safety system of this present invention. It is also known that automobiles may be equipped with light, buzzer or even voice-simulation devices for advising the driver of component or system malfunction. The present invention could readily be adapted to give such a warning to the driver.

Proceeding now to a description of the drawings, the preferred embodiment of the present invention is depicted in FIGURE 1 which illustrates a master-slave clutch and safety system 10 which employs two Hall effect sensors. System 10 includes a master cylinder 12 and a slave cylinder 14.

Master cylinder 12 includes a generally cylindrical plastic shell 16 having flange elements 18 extending therefrom to permit cylinder 12 to be secured to the vehicle. A push rod 20 enters the right hand side of cylinder 12 through a rubber boot 22, the outer end 24 of rod 20 being coupled to the vehicle clutch pedal (not shown). Depressing the pedal will cause rod 20 to be moved toward the left as viewed in this FIGURE.

A piston 26 is located adjacent the inner end 28 of rod 20 will be pushed to the left when the clutch pedal is depressed. Extending downwardly from cylinder 12 is a reservoir 30 having a hydraulinc fluid compartment 32 and an air chamber 34 separated by a deformable diaphragm 36. Compartment 32 communicates with the interior of cylinder 12 and a valve 38 is provided to allow the hydraulic fluid to pass to the left in the FIGURE as the piston 26 is moved in that direction. The valve may be a spring operated poppet type valve (partially shown) or any other type of metering valve known to the hydraulic cylinder art.

A conduit 40 couples the master cylinder 12 to the slave cylinder 14, and suitable couplings 42 and 44 are provided. The couplings can be of the quick disconnect type or any other known hydraulic couplings.

Slave cylinder 14 also includes a generally elongate plastic shell 46 and associated flange members 48 for attaching the slave cylinder to the vehicle. A piston 50 is slidably received in the bore 52 of the slave cylinder 14, and in the illustrated embodiment, a spring member 54 is employed to restrain the piston 50 and to aid in the efficiency of the system.

The right end of slave cylinder 14 is covered by rubber boot 56, through which a second push rod 58 extends. The left end 60 of push rod 58 is received in piston 50, and the right end 62 of push rod 58 is coupled to the vehicle's clutch (not shown) in any suitable manner.

From the foregoing general description it will be appreciated that depressing the clutch pedal will cause hydraulic fluid to flow through conduit 40 into the slave cylinder. The increase in pressure behind cylinder 50 will force it to the right, causing rod 58 to actuate the clutch. A number of illustrated components of the cylinders have not been described in detail (e.g. the sealing rings) because they are conventional and do not, in and of themselves, form part of the present invention. The foregoing explanation of this operation of system 10 assumes that the system is working properly, i.e. there are no leaks, breakages, etc. The safety system which will indicate such malfunctions will now be described.

In FIGURE 1, the safety system includes a pair of Hall effect sensors. A first sensor 64 is located adjacent the shell 16 of cylinder 12 and the second sensor 66 is arranged adjacent the shell 46 of slave cylinder 14. Because the shells are plastic in the illustrated embodiment, the sensors can be located externally of the cylinders. If the shells were constructed of ferrous metal, it would be necessary to locate the sensors in the

inferior of the cylinders. A Hall effect sensor is a sensor adapted to determine the presence of or charge of polarity of a magnetic field and, in the present invention, they are employed to determine whether pistons 26 and 50 have moved a predetermined distance when the clutch pedal is depressed. This is made possible in the illustrated embodiment by attaching magnetic material to the two pistons.

For piston 26, a rod 68 of magnetic material is affixed to the inner end of piston 26 by bolt 70. It will be apparent then that as piston 26 moves toward sensor 64, sensor 64 will be able to detect the magnetic field generated by rod 68.

A similar construction is employed in the slave cylinder 14, where a magnetic washer 72 surrounds push rod 58 and is affixed to the right face of piston 50 using bolts 74. A washer is used in this instance because piston 50 can rotate. In any event, the precise type of sensor, magnetic material and location thereof can be varied as long as the basic principles of operation now to be described are followed.

Normal operation of system 10 was described above, and now that the safety system has been explained it should be apparent that in normal operation the magnets on the two pistons will move to a location adjacent the sensors 64 and 66 when the pedal is depressed. At such time, the sensors switch to an activated condition. If, however, either or both of the sensors do not

0195463

activate, for example, because a leak has occurred at the couplings of conduit 40, the sensors 64 and/or 66 will not activate and ignition of the vehicle will be prevented.

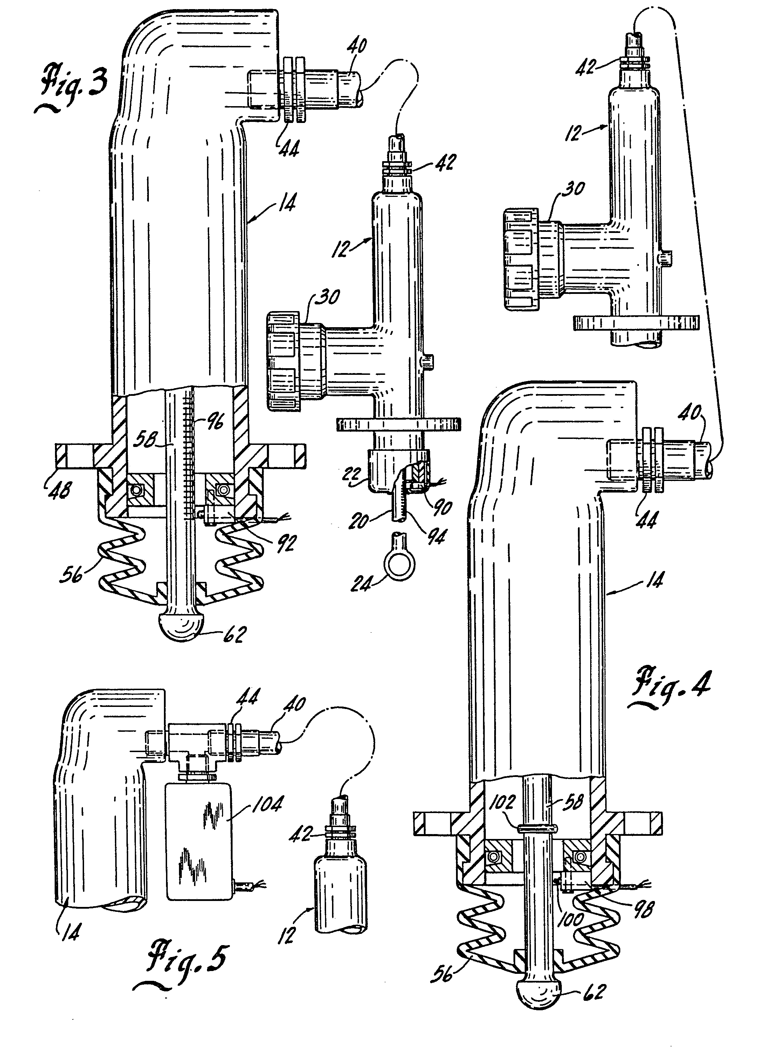

While the electrical system employed with the safety system of the present invention may take a variety of forms, an illustrative electrical system is shown in FIGURE 2. This FIGURE shows the two sensors 64 and 66 connected in series between the ignition key 78, a coil relay 80 and the starter 82. The particular circuitry can be custom tailored to the particular vehicle with which the present invention is to be used. The resistors, transistors, diodes, etc., could readily be selected by one skilled in the art for a particular application.

In operation, the key 78 is turned on by the driver. If the vehicle is in gear, and if the clutch pedal is depressed, and if there are no malfunctions of the hydraulic master-slave cylinder system 10, then power will flow to the coil relay and the vehicle will start. If, on the other hand, the clutch pedal is not depressed, or one of the two magnets 68 or 72 has not traveled a distance sufficient to trigger the Hall effect sensors 64 and 66, then the circuit will be closed by one or both sensors and ignition will not occur.

While system 10 has been illustrated as including a pair of sensors 64 and 66, the system could be readily modified to include only one. If this is the design choice, it is preferable

- 11 -

to maintain sensor 66 located in the slave cylinder 14. The benefit of employing it in the slave cylinder is that the push rod 58 is the final link between the pedal and the clutch, and if a problem has developed in the system it will, in all cases, manifest itself at that location. With such a modification, the circuit of FIGURE 2 would be simplified by removing sensor 64, but otherwise the circuit would function as described above.

Proceeding now to FIGURE 3, an alternate embodiment of invention is disclosed. Here, as was the case with the FIGURE 1 embodiment, a master cylinder 12 and a slave cylinder 14 are provided. Instead of Hall effect sensors, this embodiment uses bar code readers. One such reader 90 is located in master cylinder 12 inwardly of boot 22, and a second reader 92 is located at the right end of cylinder 14 inwardly of boot 56. Each of these readers is capable of reading bar codes 94 and 96 located respectively on rods 20 and 58. Bar code readers are, in and of themselves, well known and are frequently used as position indicators. In the present invention they are employed for the purpose of determining the location of rods 20 and 58 and are coupled into the circuitry (such as that shown in FIGURE 2) to perform the same function as the Hall effect sensors 64 and 66.

If only a single bar code reader is used, it would be preferable to locate a single reader in the slave cylinder for the reason described above. Also, the particular location of the bar code readers 90 and 92 within the cylinders could be widely varied by the cylinder designer.

A further embodiment of the present invention is illustrated in FIGURE 4. In this embodiment, this slave cylinder includes a mechanical switch 98 just inside the boot 56, element 98 including a switch trigger 100 located adjacent rod 58. A ring 102 is provided on rod 58 in such a manner that trigger 100 is contacted by ring 102 when push rod 58 is extended by a distance sufficient to positively actuate the clutch. Switch 98 is included in the electronic circuitry as was previously described in connection with FIGURE 2. The FIGURE 4 embodiment shows only a single switch, but it should be apparent from the foregoing discussion of the present invention that a similar switch could also be employed in the master cylinder.

Yet another embodiment of the present invention is shown in FIGURE 5. In this case a pressure sensor transducer 104 is employed to measure the hydraulic pressure of the fluid flowing into slave cylinder 14, through conduit 40. Such pressure sensors are generally known to the hydraulics art and the type of sensor is not critical to the present invention. In the illustrated embodiment, however, the sensor 104 is coupled to a T-fitting 108 located intermediate coupling 44 and slave cylinder 14. The sensor 104 is activated when sufficient pressure has been supplied to slave cylinder 14 to insure positive clutch actuation. Sensor 104 will be incorporated in the circuitry of FIGURE 2 as aforementioned.

It should be obvious to one skilled in the art after reading the present specification that a wide variety of modifications can be made to the safety systems described above. For example, the pressure sensor of FIGURE 5 could be used in series with any of the other types of sensors described above. Accordingly, the present invention is not to be limited by the description or illustration of certain specific disclosed embodiments but is to be limited solely by the scope of the claims which follow.

0195463

CLAIMS

1. In a hydraulic master-slave cylinder system for actuating a vehicle clutch which includes a hydraulic master cylinder coupled to the vehicle's clutch pedal, a hydraulic slave cylinder coupled to said master cylinder by a fluid conduit, said clutch being coupled to said slave cylinder, the improvement comprising means for detecting whether said clutch has been positively disengaged by said hydraulic master-slave cylinder system and means for preventing starting of said vehicle if positive disengagement of the clutch has not occurred.

2. The invention set forth in Claim 1 wherein said detecting means comprises a Hall effect sensor located in said master cylinder and a magnetic means coupled to any portion of said master cylinder which moves in response to depressing said clutch pedal, said sensor and magnetic material functioning as a switch means to determine if said moving portion has moved a preselected distance.

3. The invention set forth in Claim 1 wherein said detecting means comprises a Hall effect sensor located in said slave cylinder and a magnetic means coupled to any portion of said slave cylinder which moves in response to depressing said clutch pedal, said sensor and said magnetic material functioning as a switch means to determine if said moving portion has moved a preselected distance.

-15-

4. The invention set forth in Claim 1 wherein said detecting means comprises a Hall effect sensor located in each of said master cylinder and said slave cylinder, magnetic means attached to a movable component of each of said master cylinder and said slave cylinder, each of said sensors cooperating with the magnetic means of its own cylinder to function as a switch means to determine whether said movable component has moved a preselected distance.

5. The invention set forth in Claim 2 wherein said master cylinder includes a piston means and said magnetic means is attached to said piston means of said master cylinder.

6. The invention set forth in Claim 5 wherein said master cylinder comprises a plastic shell and wherein said Hall effect sensor is located on the exterior of said cylinder.

7. The invention set forth in Claim 3 wherein said slave cylinder includes a piston means and said magnetic means is coupled to said piston means of said slave cylinder.

8. The invention set forth in Claim 7 wherein said slave cylinder comprises a plastic shell and wherein said Hall effect sensor is located on the exterior of said slave cylinder.

9. The invention set forth in Claim 4 wherein each of said master and slave cylinders include a piston means and wherein said magnetic means is attached to each of said piston means.

-16-

10. The invention set forth in Claim 9 wherein each of said master and slave cylinder 5 include a plastic shell, said sensors being located on the exterior of the respective cylinders.

11. The invention set forth in Claim 1 wherein said detecting means comprises an optical bar code reader located in said master cylinder, bar code means being provided on a component of said master cylinder which moves in response to depressing of said clutch pedal, said optic bar code reader and said bar code means functioning as a switch means to determine if said moving component has moved a preselected distance.

12. The invention set forth in Claim 1 wherein said detecting means comprises an optical bar code reader located in said slave cylinder, bar code means located on a component of said slave cylinder which moves in response to depressing of said clutch pedal, said optic bar code reader and said bar code means functioning as a switch means to determine if said moving component has moved a preselected distance.

13. The invention set forth in Claim 1 wherein said detecting means comprises an optical bar code reader located in each of said master cylinder and said slave cylinder, bar code means being provided on a component of each of said master cylinder and said slave cylinder which moves in response to depressing said clutch pedal, each of said pair of readers and said code means functioning as a switch means to determine if said moving components have moved a preselected distance.

14. The invention set forth in Claim 11 wherein said master cylinder includes a clutch pedal push rod means and a piston means coupled thereto and wherein said bar code means is provided on said clutch pedal push rod means.

15. The invention set forth in Claim 12 wherein said slave cylinder includes a clutch push rod means coupled and a piston means coupled thereto, and wherein said bar code means is provided on said clutch push rod means.

16. The invention set forth in Claim 1 wherein said detecting means comprises a mechanical switch and means on a component of said slave cylinder which moves in response to depressing said clutch pedal, said means on said movable component being arranged to contact said mechanical switch means when said movable component has moved a preselected distance.

17. The invention set forth in Claim 16 wherein said movable component comprises a clutch push rod means, said push cylinder including a piston, and said push rod means coupling said piston to said clutch, said means mounted on said movable component being an annular ring surrounding said clutch push rod means.

18. The invention set forth in Claim 1 wherein said detecting means comprises means for sensing the hydraulic fluid pressure in said system.

19. The invention set forth in Claim 18 wherein said sensing means comprises a fluid pressure transducer coupled to said conduit in the vicinity of said slave cylinder.

20. The invention set forth in Claim 1 wherein said preventing means comprises an electronic circuit including said detecting means and in which power is prevented from flowing to the starter of the vehicle if disengagement has not occurred.

21. The invention set forth in Claim 20 wherein the vehicle's ignition system includes a power supply, a key and a starter, and wherein said circuit is located between said key and said starter.

22. A safety system for preventing ignition of a vehicle which includes a manual transmission unless the transmission is in gear and the clutch is positively actuated, comprising:

a hydraulic master cylinder coupled to the clutch pedal of said vehicle by rod means, said master cylinder including a piston movable by said rod means;

a hydraulic fluid conduit means coupled to said master cylinder;

slave cylinder means coupled to said conduit, said slave cylinder means including a piston;

rod means coupling said piston of said slave cylinder to the clutch of the vehicle;

sensing means provided for at least one of said cylinders to detect whether a movable component thereof have moved by a preselected distance sufficient to cause positive actuation of said clutch when said clutch pedal is depressed;

an electronic starter circuit for said vehicle;

and said sensing means being part of said circuit whereby ignition is prevented in the event the said movable component has not moved by said preselected distance.

23. The invention set forth in Claim 22 wherein said sensing means comprise Hall effect sensing means.

24. The invention set forth in Claim 22 wherein said sensing means comprise optical bar code reader sensing means.

25. The invention set forth in Claim 22 wherein said sensing means comprise mechanical switch means.

26. The invention set forth in Claim 22 wherein said sensing means comprise means for sensing the hydraulic fluid pressure in said conduit means in the vicinity of said slave means.

0195463

*Fig.1*

*Fig.2*

Fig.3

40

44

14

12

42

30

96

58

48

92

56

62

22

20

90

94

24

42

12

30

40

44

14

Fig.4

102

58

98

100

56

62

Fig.5

44

40

104

42

12

14